# DEMANDE DE BREVET EUROPEEN

(11) **EP 0 566 480 A1**
(43) Date de publication de la demande: **20.10.1993**
(21) Numéro de dépôt: 93400962.2
(22) Date de dépôt: 13.04.1993
(51) Int. Cl.: G01N 21/77, G01N 21/85

(54) **Sonde de mesure à membrane à perméabilite sélective et son procédé de fabrication**

(30) Priorité: 14.04.1992 FR 9204552
(71) Demandeur: INSTITUT FRANCAIS DU PETROLE, F-92502 Rueil-Malmaison (FR)
(72) Inventeur: Bienvenu, Jean, F-92370 Chaville (FR); Michard, Gil, F-75013 Paris (FR); Ciabrini, Jean-Pierre, F-94100 Saint Maur des Fosses (FR)

(57) **Abrégé**

Une cellule de mesure à indicateur coloré et son procédé de fabrication. La cellule destinée à être plongée dans un milieu comporte une membrane (1) perméable ou semi-perméable gainant un élément allongé fin (2), un volume de solution indicatrice colorée (6) contenue dans l'élément allongé (2), dont les variations de couleur sont indicatives des variations du milieu, et au moins une ouverture (3) sur une paroi de l'élément allongé pour obtenir une surface d'échange importante entre le volume de solution indicatrice colorée et le milieu au travers de la membrane.

## Description

La présente invention concerne une cellule de mesure contenant une solution indicatrice colorée destinée à être plongée dans un milieu avec lequel elle peut réagir par un transfert ionique ou par un transfert de gaz au travers d'une membrane à perméabilité sélective et son procédé de fabrication.

La présente invention est plus particulièrement adaptée à mesurer la concentration du gaz carbonique ou dioxyde de carbone, dissous dans une eau de mer. Il semble particulièrement intéressant, dans un environnement soumis aux pollutions d'origine industrielle, d'être en mesure de prévoir l'évolution dans le temps de la concentration des gaz favorisant l'effet de serre, et en particulier du dioxyde de carbone.

La cellule de mesure appartient à la catégorie des cellules de mesure dites "actives" car elle comporte un réactif approprié qui, sous l'effet du transfert à étudier interagit sur une lumière incidente. L'étude de la lumière résultant de cette interaction permet d'aboutir au résultat de la mesure.

On connaît déjà des capteurs optiques actifs, à fibres optiques, notamment par les brevets US-4.200. 110, EP-A007355 8, EP-A0126600 et FR2613074. Les capteurs décrits dans ces documents permettent d'étudier des solutions liquides et comprennent au moins deux fibres optiques guidant de la lumière au travers d'une solution réagissante appropriée à la mesure à effectuer sur une solution liquide donnée. Le réactif peut être immobilisé sur des particules de polystyrène par exemple ou supporté par un élément poreux ou adsorbant. Ces dispositifs présentent l'inconvénient de faire intervenir un support qui est, en général, très diffusant pour la lumière et donc constitue un mauvais système optique de transmission ou de réflexion optique.

On connaît aussi des dispositifs de mesure comprenant une cellule délimitée par une membrane semi-perméable à un gaz tel que le dioxyde de carbone contenu dans un milieu à étudier et contenant une solution colorée réagissant au gaz qui traverse la membrane. Les cellules de ces dispositifs connus sont relativement grandes ce qui a pour inconvénient d'augmenter le temps de diffusion du milieu à étudier au travers de la membrane jusqu'à réagir avec la totalité de la solution indicatrice colorée et donc ne permet pas au gaz dissous dans l'indicateur coloré de se mettre en équilibre rapidement avec le gaz dissous dans le milieu à étudier. Les mesures ne sont donc pas totalement représentatives de la concentration en gaz du milieu.

Le dispositif selon l'invention permet de rémédier à ces inconvénients.

Il comporte une cellule de mesure à indicateurco- loré approprié destinée à être plongée dans un milieu, caractérisée en ce qu'elle comporte en combinaison un élément allongé fin et creux, une membrane perméable ou semi-perméable gainant l'élément allongé, un volume de solution indicatrice colorée contenue dans l'élément allongé, dont les variations de couleur sont indicatives des variations dudit milieu, la paroi dudit élément allongé étant pourvu d'au moins une ouverture sur une partie de sa longueur de façon à obtenir une surface d'échange relativement importante entre le volume de solution indicatrice colorée et ledit milieu au travers de la membrane.

La section de l'élément allongé est choisie de préférence sensiblement égale à celle desdites fibres de façon que la lumière passant de l'une à l'autre traverse sensiblement tout le volume de la solution indicatrice colorée contenu dans l'élément allongé.

Selon un mode préférentiel de réalisation selon l'invention l'élément allongé est un tube cylindrique.

On utilisera de préférence un tube cylindrique comportant des ouvertures réparties sur une partie de sa périphérie, l'aire de ces ouvertures étant choisie de façon à obtenir une valeur maximale du rapport Sr/Vr entre la surface réactionnelle et le volume de la solution indicatrice colorée.

La valeur de ce rapport Sr/Vr sera de préférence choisie supérieur à 2/d où d est le diamètre du tube.

Le diamètre de la cellule de mesure sera de préférence inférieur à 1mm, de façon à minimiser le temps de diffusion du milieu au travers de la membrane jusqu'à la solution indicatrice colorée.

La solution indicatrice colorée peut comporter du bleu de thymol.

La présente invention a aussi pour objet un procédé de fabrication d'une cellule de mesure à indicateur coloré. Le procédé est, caractérisé en ce qu'il comporte les étapes suivantes :
a) on forme un élément allongé fin et creux pourvu d'une ouverture à chacune de ses extrémités et d'au moins une ouverture dans sa paroi latérale;
b) on gaine ledit élément allongé fin et creux d'une membrane perméable ou semi-perméable,
c) on introduit la solution indicatrice colorée dans ledit élément allongé;
d) on introduit alors à chacune des deux extrémités opposées dudit élément allongé une fibre optique venant obturer une extrémité dudit élément allongé, et
e) on réalise l'étanchéité entre chaque fibre et l'élément allongé au moyen d'un joint.

Selon un mode préférentiel de réalisation du procédé, la membrane devant gainer l'élément allongé peut être une membrane fabriquée par moulage sur un moule de forme adaptée à celle de l'élément allon- g^{é.}

Le moulage peut être obtenu par immersion du moule dans un bain liquide contenant une substance choisie suivi d'une solidification.

Le bain liquide peut contenir une substance polymérisable à l'air.

On peut après l'étape a) procéder à un polissage de l'élément allongé.

On peut obtenir l'étanchéité entre l'élément allongé et chaque fibre optique par une thermorétraction d'une portion de gaine en matériau rétractable.

On peut réaliser les opérations b, c, et d , les différents éléments étant immergés dans la solution indicatrice colorée préalablement débarassée de tout gaz dissous.

On peut introduire la solution indicatrice colorée dans l'élément allongé avant son gainage par ladite membrane.

Avec son tube fin de section sensiblement égale à celle des fibres et pourvu d'ouvertures latérales d'aire relativement importante, on facilite la diffusion rapide d'un gaz dissous dans le milieu étudié jusqu'au centre de la cellule et on obtient un éclairement global de la solution colorée par la lumière incidente. Il en résulte une vitesse de réaction et une fidélité de mesure améliorées.

Le dispositif permet de plus de minimiser, du fait de sa géométrie, les problèmes de fouling ou salissures marines venant se fixer sur la membrane, qui en effet n'est pas plane.

Un autre avantage de l'invention est d'assurer l'étanchéité sans effort mécanique au niveau de la fibre optique.

L'invention sera mieux comprise à l'aide de la description qui va suivre, donnée uniquement à titre d'exemple et faite en se référant aux dessins annexés où :
- La figure 1 représente un exemple de réalisation de cellule selon l'invention;
- Les figures 2A et 2B montrent un exemple de réalisation du tube percé de fentes selon l'invention; et
- La figure 3 est une vue de face d'un tube percé selon l'invention omportant des trous comme ouverture.

La cellule comporte un élément allongé creux ouvert à ses deux extrémités opposées tel qu'un tube, agencé pour contenir une solution indicatrice colorée qui est susceptible de réagir à certaines variations d'un milieu à étudier et pour permettre cette réaction. Une membrane perméable au gaz dont il s'agit de mesurer les variations de teneur, enrobe le tube à l'exception de ses deux ouvertures terminales. La paroi latérale du tube comporte au moins une ouverture permettant des échanges avec le milieu extérieur au travers de la membrane.

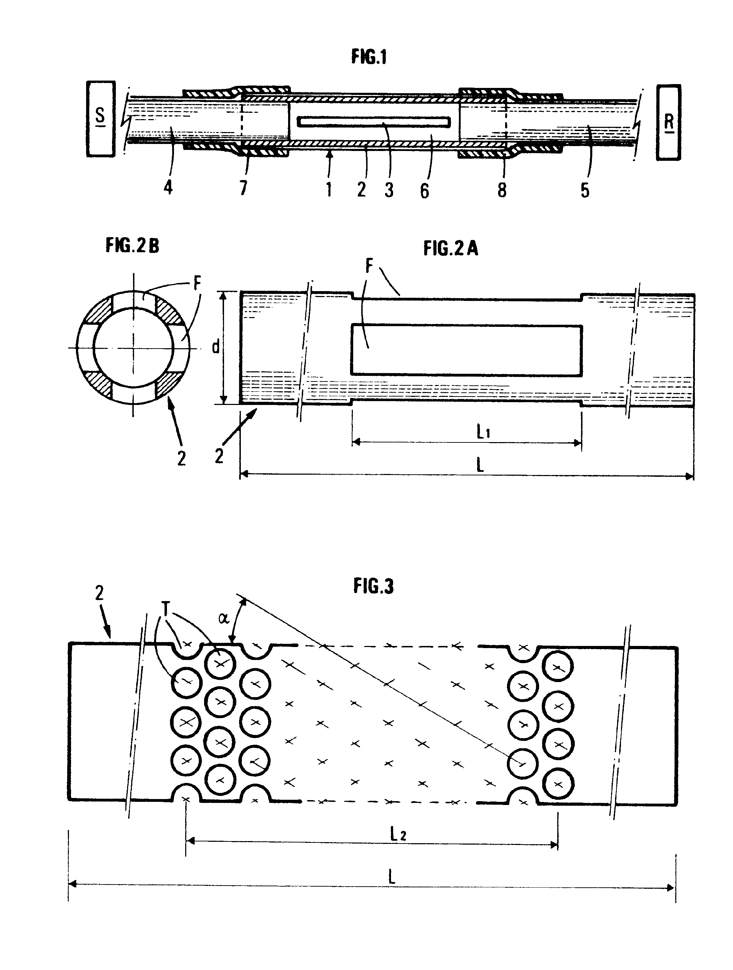

La cellule selon l'invention telle qu'elle est montrée sur la figure 1, est adaptée plus particulièrement à mesurer la teneur en dioxyde de carbone dissous dans un milieu dans lequel elle est plongée. La cellule comporte un élément allongé creux tel qu'un tube, agencé pour contenir une solution indicatrice colorée qui est susceptible de réagir à cette variation de teneur et pour permettre cette réaction.

La cellule comporte une membrane 1 perméable ou semi-perméable aux espèces chimiques réactives qui gaine un élément allongé 2, tel qu'un tube cylindrique, sur toute sa longueur à l'exception de ses extrémités longitudinales, le tube présentant sur sa paroi au moins une ouverture 3 qui va permettre au milieu dans lequel est plongé la cellule de diffuser dans la solution indicatrice colorée. Deux fibres optiques 4, 5 sont connectées respectivement aux deux extrémités opposées du tube 2, l'extrémité de la fibre dépourvue de sa gaine pénétrant dans le tube a un diamètre sensiblement égal au diamètre interne du tube pour que la lumière issue de la fibre optique parcourt tout le volume réactionnel Vr contenant la solution indicatrice colorée. Le volume réactionnel Vr délimité par le tube 2 et les extrémités des fibres 4, 5 pénétrant dans le tube contient un indicateur coloré 6 adapté à réagir en fonction des variations de la teneur en gaz du milieu à analyser.

Deux manchons 7, 8 sont placés autour des parties terminales du tube 2 de façon à maintenir en place la membrane et chacune des deux fibres 4, 5 par rapport au tube 2. Les manchons 7, 8 assurent l'étanchéité à la jointure entre chacune des fibres et le tube. Les joints 7, 8 sont constitués, par exemple, d'une portion de gaine thermorétractable qui permet de réaliser l'étanchéité entre le tube gainé et les fibres optiques sans induire de contraintes dans la fibre optique qui risqueraient de la détériorer.

La membrane 1 peut être constituée de tout matériau permettant la diffusion rapide d'une espèce chimique particulière présente dans le milieu à analyser dans la totalité de la solution indicatrice colorée, elle-même contenue dans le volume réactionnel.

Les membranes sont par exemple des membranes en silicone fabriquées en laboratoire à partir d'une solution de polymère commercialisée par la société DOW CORNING sous le N° 92009.

On peut aussi fabriquer ces membranes à partir d'une substance qui est fonction des espèces chimiques à étudier comme on le verra plus loin au cours de la description de la méthode de fabrication de la cellule.

L'épaisseur de la membrane est choisie de façon à avoir une vitesse de diffusion rapide du milieu à étudier vers le volume réactionnel et en même temps à assurer une certaine résistance à la membrane. L'épaisseur de cette membrane est de préférence inférieure à 200micromètres, de façon à réduire le temps de mise à l'équilibre de la solution indicatrice colorée avec le milieu à étudier et ainsi de minimiser l'intervalle de temps entre deux mesures.

La somme des surfaces des ouvertures réparties sur la paroi de la partie centrale cylindrique du tube définit une surface réactionnelle Sr. On agrandit le plus possible les ouvertures latérales ou on augmente au maximum leur nombre de façon que le rapport de la surface d'échange Sr avec le milieu à étudier au volume réactionnel V2 soit le plus élevé possible. La valeur de ce rapport est de préférence supérieur à 2/d où d est le diamètre du tube. Par cette augmentation de la surface réactionnelle, l'équilibre chimique entre le milieu et la solution au travers de la membrane s'effectue plus rapidement et plus complétement.

Dans le même but, on choisit un tube dont la valeur de diamètre est la plus petite possible. La valeur de ce diamètre sera, de préférence, inférieure à 1 mm.

Les figures 2Aet 2B représentent un exemple de réalisation d'un tube cylindrique comprenant des ouvertures en forme de fentes.
La figure 2A montre une vue de face d'un tube ayant une longueur L de 30mm la partie centrale de ce tube étant percée de fentes F. Ces fentes ont une longueur L1 de 10mm et une largeur de 0,6mm.
La figure 2B montre en coupe la distribution des fentes sur la circonférence du tube, le nombre de ces fentes, dans cet exemple est de quatre, ce qui permet d'obtenir une valeur élevée du rapport de la surface réactionnelle au volume réactionnel sans nuire à la rigidité mécanique du tube.
La figure 3 représente une vue de face d'un tube dont la partie centrale est pourvue sur une longueur L2 de 1 Omm d'ouvertures ayant la forme de trous. Les trous T sont distribués en quinconce sur toute la longueur L2 de la partie centrale du tube. Sur la figure 3, on a représenté 12 rangées de trous équidistantes, les trous étant alignés sur des lignes faisant un angle a de 30° par rapport à l'axe longitudinal. Les trous ont sur cet exemple un diamètre de 0,8mm, ce qui permet d'avoir une valeur de rapport de la surface percée à la surface pleine de la partie centrale du tube égale à 0,43.

Pour réaliser la cellule selon l'invention on peut, par exemple, procéder de la façon suivante.

On part d'un élément allongé tel qu'un tube 2 de faible section qui peut être, par exemple en acier inoxydable. On perce dans la paroi latérale de la partie centrale de ce tube au moins une ouverture 3. Le nombre des ouvertures 3 et leur disposition sont déterminés en fonction de la valeur de la surface réactionnelle que l'on veut obtenir et des contraintes technologiques. Le perçage de ces ouvertures 3 se fait par électrochimie, électroérosion, laser ou toute autre méthode permettant de réaliser des ouvertures de faible dimensions.

Avec le tube précédent on peut assembler la cellule de plusieurs façons qui vont être données à titre illustratif et non limitatif

Suivant un premier mode de réalisation, on gaine avec une membrane 1 perméable ou semi-perméable préfabriquée le tube 2 percé sur toute sa longueur à l'exception de ses extrémités longitudinales. On remplit alors le tube percé gainé d'une solution indicatrice colorée 6 puis on introduit à chacune de ses extrémités longitudinales une fibre optique 4, 5, chacune d'elles étant enfoncée dans le tube jusqu'à ce que son extrémité soit au voisinage, sans toutefois l'obstruer, des ouvertures 3 de la paroi du tube 2 pour éviter tout risque de réaction entre le milieu à étudier et la solution à indicateur coloré en dehors du volume réactionnel Vr. Une réaction pourrait éventuellement se faire dans l'espace compris entre la membrane 1 et la paroi du tube 2. Les fibres optiques 4, 5, ayant été introduites dans le tube 2, on réalise l'étanchéité entre le tube, la gaine et la fibre optique à l'aide de manchons 7, 8, constitués, par exemple, d'une gaine thermorétractable de façon qu'en chauffant elle vienne épouser la forme extérieure du tube gainé 2 et de la fibre optique 4, 5 et assurer ainsi une étanchéité parfaite.

On connecte ensuite à l'extrémité de l'une des fibres optiques 4 une source de lumière et à l'extrémité de la seconde fibre optique 5 un récepteur de la lumière.

Suivant un autre mode de réalisation, on intégre la fabrication de la membrane dans le processus de fabrication de la cellule. Pour celà, on plonge un support ayant une forme correspondant à la forme finale de la membrane souhaitée dans un bain contenant une substance qui est choisie en fonction du milieu à étudier et qui permet l'équilibrage chimique recherché. Le matériau de ce support est choisi de façon à permettre un retrait facile de la membrane. Dans le cas d'une mesure de la teneur en C02 dissous dans un milieu on peut ainsi utiliser un monomère polymérisable à l'oxygène de l'air. On retire ensuite le support enrobé de la substance et on laisse celle-ci prendre une forme solide.

Pour éliminer tout gaz susceptible de réagir avec le milieu ou avec la solution indicatrice colorée et nuire à la qualité des mesures, on procède de la façon suivante : le tube ayant été percé selon la méthode décrite précédemment, on immerge le tube 2 et la membrane 1 dans la solution indicatrice colorée 6. La solution indicatrice colorée 6 est dégazée et maintenue continuellement dans un état dégazé par tout moyen connu qui peut être une mise en agitation. Le tube 2 étant immergé dans la solution indicatrice colorée 6, il se remplit de cette dernière. On gaine alors le tube 2 avec la membrane 1, cette opération s'effectuant toujours dans la solution indicatrice colorée. On immerge ensuite l'extrémité de deux fibres optiques 4, 5 suffisamment pour pouvoir les introduire dans chaque extrémité du tube gainé. On introduit comme précédemment les fibres optiques 4, 5 dans le tube jusqu'à ce que leur extrémité se trouve placée au voisinage de l'ouverture 3 sans toutefois l'obstruer, puis on met en place les manchons d'étanchéité 7, 8 avant d'effectuer la connection des fibres à la source de lumière et au récepteur de la lumière.

Ce mode de réalisation est particulièrement adapté à la fabrication d'une cellule prévue pour analyser des milieux contenant des ions sensibles à la présence de gaz, car toutes les opérations de montage sont effectuées dans la solution indicatrice colorée dégazée est maintenue dans un état dégazé.

Lorsque l'on veut fabriquer une cellule destinée à la mesure du C02 la solution indicatrice colorée comprend du bleu de thymol mis en solution avec du NaCI et du NaHC03, cette solution étant maintenue dégazée lors du processus de fabrication de la cellule.

Il est bien entendu que l'opération de gainage du tube peut se faire de plusieurs façons. On peut lors de cette opération retirer le support ayant servi à fabriquer la membrane, le support servant alors de guide au tube que l'on cherche à gainer. Ce support peut aussi avoir été retiré préalablement à l'opération de gainage.

La cellule décrite à la figure 1 peut être utilisée de la façon suivante : la cellule est immergée dans le milieu à étudier dont on veut déterminer la teneur en dioxyde de carbone dissous sous forme de gaz carbonique ou combiné sous forme de carbonates et bicarbonates.

Une lumière appropriée, issue de la source lumineuse, est injectée dans la fibre optique émettrice 4 par l'extrémité se trouvant à l'extérieur du tube. La lumière ayant balayé en totalité le volume réactionnel est reçue par la fibre réceptrice 5 placée à l'autre extrémité du tube 1 et analysée au moyen d'un photo- détecteur approprié.

L'intensité de la lumière est fonction de la teneur en dioxyde de carbone contenue dans le milieu étudié et donc, par suite de l'établissement d'un équilibre carbonique, du pH de la solution indicatrice colorée par colorimétrie, comme il est bien connu de l'homme du métier.

On ne sortirait pas de l'invention en utilisant d'autres indicateurs colorés que le bleu de thymol, l'indicateur étant choisi en fonction des espèces chimiques à étudier.

De la même façon , la mesure pourrait être effectuée par des méthodes telles que des méthodes de fluorescence ou par spectrométrie Raman.

## Revendications

1) Cellule de mesure à indicateur coloré approprié destinée à être plongée dans un milieu, caractérisé en ce qu'elle comporte en combinaison un élément allongé fin et creux (2), une membrane perméable (1) ou semi-perméable gainant l'élément allongé (2), un volume de solution indicatrice colorée (6) contenue dans l'élément allongé (2), dont les variations de couleur sont indicatives des variations dudit milieu, la paroi dudit élément allongé étant pourvu d'au moins une ouverture (3) sur une partie de sa longueur de façon à obtenir une surface d'échange (Sr) relativement importante entre le volume de solution indicatrice colorée et ledit milieu au travers de la membrane.

2) Cellule de mesure selon la revendication 1, caractérisée en ce que la section de l'élément allongé est sensiblement égale à celle desdites fibres (4, 5) de façon que la lumière passant de l'une à l'autre traverse sensiblement tout le volume de la solution colorée contenu dans l'élément allongé (2).

3) Cellule de mesure selon la revendication 1, caractérisée en ce que l'élément allongé 2 est un tube cylindrique.

4) Cellule de mesure selon la revendication 3, caractérisée en ce que ledit tube comporte des ouvertures (3) réparties sur une partie de sa périphérie l'aire de ces ouvertures étant choisie de façon à obtenir une valeur maximale du rapport (Sr/Vr) entre la surface réactionnelle et le volume réactionnel de la solution indicatrice colorée.

5) Cellule de mesure selon la revendication 4, caractérisée en ce que la valeur dudit rapport (Sr/Vr) est choisie de préférence supérieure à 2/d où d est le diamètre du tube.

6) Cellule de mesure selon la revendication 4, caractérisée en ce que le diamètre de la cellule est inférieur à 1mm de façon à minimiser le temps de diffusion du milieu au travers de la membrane jusqu'à la substance indicatrice colorée.

7) Cellule de mesure selon la revendication 1, caractérisé en ce que ladite solution indicatrice colorée comporte du bleu de thymol.

8) Procédé de fabrication d'une cellule de mesure à indicateur coloré, caractérisé en ce qu'il comporte les étapes suivantes :
a) on forme un élément allongé fin et creux pourvu d'une ouverture à chacune des ses extrémités et d'au moins une ouverture dans sa paroi latérale;
b) on gaine ledit élément allongé fin et creux d'une membrane perméable ou semi-perméable,
c) on introduit la solution indicatrice colorée dans ledit élément allongé,
d) on introduit alors à chacune des deux extrémités opposées dudit élément allongé une fibre optique, venant obturer une extrémité dudit élément allongé, et
e) on réalise l'étanchéité entre chaque fibre et l'élément allongé au moyen d'un joint.

9) Procédé de fabrication selon la revendication 8, caractérisé en ce que l'on fabrique la membrane devant gainer ledit élément allongé par moulage sur un moule de forme adaptée à celle de l'élément allon- g^{é.}

10) Procédé de fabrication selon la revendication 9, caractérisé en ce que le moulage est obtenu par immersion du moule dans un bain liquide contenant une substance choisie suivie d'une solidification.

11) Procédé de fabrication selon la revendication 10, caractérisé en ce que le bain liquide contient une substance polymérisable à l'air.

12) Procédé de fabrication selon la revendication 8, caractérisé en ce qu'après l'étape a) on procède à un polissage de l'élément allongé.

13) Procédé de fabrication selon la revendication 8, caractérisé en ce que l'étanchéité entre l'élément allongé et chaque fibre optique est obtenue par thermorétraction d'une portion de gaine en matériau thermorétractable.

14) Procédé selon la revendication 8, caractérisé en ce que l'on réalise les étapes b, c et d , les différents éléments étant immergés dans la solution indicatrice colorée préalablement dégazée.

15) Procédé selon la revendication 13, caractérisé en ce que l'on introduit la solution indicatrice colorée dans l'élément allongé avant son gainage par une membrane.
